# EUROPEAN PATENT SPECIFICATION

(11) **EP 4 461 111 B1**
(45) Date of publication and mention of the grant of the patent: **25.11.2026**
(21) Application number: 24171651.3
(22) Date of filing: 22.04.2024
(51) Int. Cl.: A01B 59/06

(54) **COUPLING DEVICE FOR CONNECTING AN AGRICULTURAL MACHINE TO A TOWING VEHICLE**
KUPPLUNGSVORRICHTUNG ZUM VERBINDEN EINER LANDWIRTSCHAFTLICHEN MASCHINE MIT EINEM ZUGFAHRZEUG
DISPOSITIF D'ACCOUPLEMENT POUR RELIER UNE MACHINE AGRICOLE À UN VÉHICULE TRACTEUR

(30) Priority: 21.04.2023 IT 202300007842
(43) Date of publication of application: 13.11.2024
(73) Proprietor: Kverneland Group Ravenna S.r.l., 48026 Russi (RA) (IT)
(72) Inventor: FRASCELLA, Cosimo, 48022 Lugo (Ravenna) (IT)
(74) Representative: Conti, Marco

(56) References cited:
- EP-A1- 1 103 171
- EP-A1- 2 389 792
- EP-A1- 4 173 458
- EP-B1- 2 874 483
- FR-A1- 3 018 029
- US-A1- 2022 287 214

## Description

This invention relates to a coupling device for connecting an agricultural machine to a towing vehicle, a towing vehicle and a method for connecting an agricultural machine to a towing vehicle.

Coupling devices are known devices used to connect agricultural machines (such as balers) to a towing vehicle (such as a tractor). Known in the prior art are numerous solutions for connecting a towing vehicle to an agricultural machine. The connection between the agricultural machine and the towing vehicle is both mechanical and hydraulic. Further, a power takeoff is used to transmit power from the towing vehicle to the agricultural machine. Traditionally, an agricultural machine is connected to a tractor by a three-point coupling. Furthermore, coupling and uncoupling the agricultural machine and the towing vehicle are traditionally carried out by hand, a task which is both demanding and time-consuming. Recent coupling devices allow the tractor to be connected to the agricultural machine without the tractor driver having to do any work by hand.

Patent document US9033074B1 provides a device used to couple the drive shaft of a tractor to another machine without the driver having to do any work by hand.

Furthermore, patent document US8336922B2 describes a device for connecting two hydraulic connections to a movable part to make a precise connection.

In this context, patent document EP2874483B1 discloses a hitch device for connecting a towing vehicle to an agricultural machine. The hitch device has a first coupling part adapted to be mounted in a lift system on the towing vehicle, for example, a three-point suspension of the tractor, and a second coupling part adapted to be mounted on the agricultural machine. The first and second coupling parts are adapted to be connected to each other to hitch the agricultural machine and the towing vehicle to each other. According to this solution, the first coupling part includes connecting parts and the second coupling part includes corresponding receiving parts to receive the connecting parts. When the connecting parts and the corresponding receiving parts are coupled, the connections between the tractor and the agricultural machine are both mechanical and hydraulic. Thus, document EP2874483B1 provides a device for connecting an agricultural machine to a towing vehicle more efficiently and which takes less time than traditional methods.

Moreover, patent document US2022287214 describes a U-shaped drive frame, which is a one-part coupling device, coupled to an implement and can be connected to a variety of machines. The coupling device of US2022287214 includes a base beam and right and left parallel side beams which extend rearward from corresponding right and left portions of the base beam and define an open implement area between the right and left side beams, where the implement can be accommodated. The coupling device of US2022287214 further includes wheels and power source and is operated robotically to move towards the implement to be engaged with the implement. In particular, the implements and the coupling device are configured such that when each implement is in the idle position, the coupling device is movable rearward with respect to each implement in the idle position to an implement loading position where each implement is connectable to the coupling device. Once an implement is supported on the coupling device, the stands that support the implements in the idle position are removed. Moreover, to further facilitate loading of the implement onto the drive frame, elevating hydraulic cylinders are to move the front wheels of the coupling device upward and downward with respect to the base beam, to engage the loading arm of the device with the corresponding rear implement load support on the implement in order to couple the implement to the device.

The prior art coupling device has some disadvantages, however, and can be improved upon. In effect, there are several needs in this field.

One need is to improve the robustness of the coupling device. Another need is to enhance the efficiency of the coupling device; in particular, there is a need for a coupling device which allows a towing vehicle to be connected to an agricultural machine in a particularly precise, safe and rapid manner.

The aim of this disclosure is to provide a coupling device for connecting an agricultural machine to a towing vehicle, a towing vehicle and a method for connecting an agricultural machine to a towing vehicle to overcome the above-mentioned disadvantages of the prior art.

This aim is fully achieved by the device and method of this disclosure as characterized in the appended claims.

According to an aspect of it, this disclosure provides a coupling device for connecting an agricultural machine to a towing vehicle. The coupling device comprises a universal connection joint. The universal connection joint has a first end and a second end. The first end of the universal connection joint is used for receiving mechanical power from a drive shaft of the towing vehicle. The second end of the universal connection joint is used for transmitting mechanical power to a drive shaft of the agricultural machine. In an example, the agricultural machine is a baler for forming bales of hay. In an example, the towing vehicle is a tractor.

The coupling device includes a first coupling part. The first coupling part is configured to be mounted on the towing vehicle. The first coupling part comprises a first connecting arrangement. The first coupling part comprises a first hydraulic connector.

The coupling device includes a second coupling part. The second coupling part is configured to be mounted on the agricultural machine. The second coupling part comprises a second connecting arrangement. The second coupling part comprises a second hydraulic connector. The second hydraulic connector is configured to be connected to the first hydraulic connector. In particular, the second hydraulic connector is configured to engage with the first hydraulic connector to establish a hydraulic connection between the towing vehicle and the agricultural machine.

The first coupling part and the second coupling part are configured to be coupled together through the first and the second connecting arrangements. The first coupling part and the second coupling part are configured to be coupled together through the first and the second connecting arrangements, to provide a mechanical connection between the agricultural machine and the towing vehicle.

The first coupling part includes a stationary portion.

The first coupling part includes a slider. Please note that slider can be also called as "cursor". The slider is connected movably to the stationary portion. The first connecting arrangement is attached to the slider. In particular, the first connecting arrangement is attached to the slider to move upwards and downwards between a coupling position and an uncoupling position. At the coupling position, the first and the second connecting arrangements are fastened. At the uncoupling position, the first and the second connecting arrangements are unfastened.

The first coupling part includes an actuator. The actuator is configured to move the slider relative to the stationary portion.

Thus, according to an aspect of this disclosure, the first coupling part has a fixed part and a movable part. The movable part moves up and down along a vertical direction. By vertical direction V is meant a direction parallel to the force of gravity. Since the first connecting arrangement is attached to the slider, the slider may also be moved along the vertical direction, upwards and downwards. It should be noted that in a non-operating step in which the towing vehicle and the agricultural machine are not connected by the first coupling part and the second coupling part of the coupling device, the first coupling part (adapted to be mounted on the towing vehicle) is at a lower height than the second coupling part; thus, the first coupling part must be moved upwards relative to the second coupling part so that the first connecting arrangement can be coupled to the second connecting arrangement. According to the solution of this disclosure, only the movable part of the first coupling part (that is, the slider), to which the first connecting arrangement is attached, can be moved upwards. As explained above, in the coupling devices of the prior art, the first coupling part is moved vertically upwards and downwards by the lift of the tractor; thus, to couple and uncouple the first and the second coupling parts, the whole of the first coupling part is moved using a part of the towing vehicle. Thus, the solution of this disclosure allows the first connecting arrangement and the second connecting arrangement to be coupled and uncoupled by simply moving only a portion of the first coupling part (the slider), in a particularly efficient manner and without using parts of the towing vehicle. It is therefore possible to obtain a highly robust and efficient coupling device. Moreover, since the slider is moved by the actuator, the lift of the towing vehicle (or other parts which are traditionally used to lift the first coupling part to allow it to be hitched to the second coupling part) is not used and remains free.

In one example, the slider (movable portion of the first coupling part) moves exclusively upwards and downwards along the vertical direction. In particular, in such an example, no rotational movement of the slider is provided for the coupling of the first and the second coupling parts.

In particular, in one example, the implement is not moved (for example vertically) for the coupling of the first and the second coupling parts, and the coupling is carried out thought the movement of the first coupling part.

In an example, the first coupling part comprises a connection bolt arrangement (that is, a locking bolt). The first coupling part includes a connection bolt actuator. The connection bolt actuator is connected to the connection bolt arrangement. Further, the second coupling part includes a corresponding aperture arrangement. The aperture arrangement is configured to house the connection bolt arrangement.

The connection bolt actuator is configured to move the connection bolt arrangement between a first position and a second position. At the first position, the first and the second coupling part are uncoupled. Also at the first position, the connection bolt arrangement is distanced from the corresponding aperture arrangement. At the second position, the first and the second coupling part are coupled to each other. Also at the first position, the connection bolt arrangement is inserted inside the corresponding aperture arrangement. Thus, when the first and second coupling parts are coupled to each other and the connection bolt arrangement is inserted inside the corresponding aperture arrangement, the coupling device is prevented from moving along the vertical direction. It is therefore possible to obtain a coupling device which is more stable and robust.

It should be noted that in another example, the second coupling part may include the connection bolt arrangement and the first coupling part may include the corresponding aperture arrangement.

In an example, the coupling device includes a sleeve. The sleeve may be located at the first end of the universal connection joint.

The sleeve is configured to house the drive shaft of the towing vehicle at one side and the drive shaft of the agricultural machine at the other side thereof.

In an example, therefore, the sleeve and the universal connection joint form a unit for housing the drive shaft of the towing vehicle and the drive shaft of the agricultural machine and for transferring the mechanical power from the towing vehicle to the agricultural machine. In an example, the sleeve has grooves on an inner side of it. Said grooves match splines of the drive shaft of the towing vehicle and of the drive shaft of the agricultural machine.

In an example, the universal connection joint includes a sleeve actuator. The sleeve actuator is located at the first end of the universal connection joint. The sleeve actuator is configured to move the sleeve horizontally forwards and backwards between a first configuration and a second configuration. In the first configuration the sleeve houses the drive shaft of the towing vehicle. In the first configuration the drive shaft of the agricultural machine is distanced from the sleeve. In the second configuration the sleeve houses both the drive shaft of the towing vehicle and the drive shaft of the agricultural machine. It is therefore possible to connect the drive shaft of the towing vehicle and the drive shaft of the agricultural machine in a particularly precise and efficient manner.

In an example, the second coupling part comprises a support device. The support device includes a support rod. The support rod extends vertically. The support rod is movable. The support rod is movable along the vertical direction upwards and downwards.

The support device includes a support plate. The support plate extends horizontally. The support plate is connected to the support rod. The support plate is configured to hold the second coupling part in a vertical position. The support device includes a hydraulic actuator. The hydraulic actuator is configured to move the support rod vertically between an inactive position and an active position. In an example, the actuator which moves the support rod vertically might not be hydraulic (for example, it might be an electric actuator). At the inactive position, the support rod is extended. At the inactive position, also, the support plate is positioned on the ground. At the active position, the support rod is retracted. At the active position, the plate is distanced from the ground. Thus, according to an aspect of this disclosure, at the inactive position (when the first and second couplings are uncoupled), the second coupling part is supported by the support device. In particular, the support rod and the support plate hold the second coupling part and support its weight in the vertical position. In particular, as explained above, when the second coupling part is mounted on the agricultural machine and the first and second coupling parts are uncoupled, the support rod is extended along the vertical direction and the support plate is on the ground to hold the second coupling part securely in place.

In an example, the second coupling part may comprises a horizontal bar. The horizontal bar projects from the back of the second coupling part. The back of the second coupling part may be defined as the side facing towards the agricultural machine. The second coupling part also includes a horizontal plate. The horizontal plate is connectable to the agricultural machine. The horizontal plate is slidable along the horizontal bar. In particular, the horizontal plate is slidable between an open position and a closed position. At the open position, the first and the second coupling part are coupled to each other. Also at open position, the horizontal plate is extended. At the closed position, the first and the second coupling part are uncoupled. At the closed position, the horizontal plate is retracted. The horizontal plate is configured to control the lateral movements of the second coupling part. The second coupling part may also include a horizontal plate actuator. The horizontal plate actuator is configured to move the horizontal plate between said open and closed positions.

According to an aspect of this disclosure, therefore, the support plate (connectable to the agricultural machine) is used to prevent the second coupling part from moving laterally. In particular, when the second coupling part is mounted on the agricultural machine, and the first and second coupling parts are uncoupled, the second coupling part is supported by the horizontal plate (at the open position); it is thus possible for the second coupling part to be held in a particularly stable manner, while the coupling device is at the inactive position (the first and second coupling parts are uncoupled).

In an example, the first coupling part comprises a hydraulic connection actuator. The hydraulic connection actuator is configured to move the first hydraulic connector forwards and backwards along a horizontal direction. The hydraulic connection actuator is configured to move the first hydraulic connector between an operative and a non-operative position. At the operative position, the first and second hydraulic connectors are coupled. At the non-operative position, the first and second hydraulic connectors are distanced from each other. It is therefore possible to establish a hydraulic connection between the agricultural machine and the towing vehicle in a particularly efficient manner.

In an example, the stationary portion of the first coupling part is connectable to a frame of the towing vehicle. In particular, in an example, the stationary portion has a pair of plates. The pair of plates extends horizontally. Each plate of the pair of plates has a pair of pins. The pins of the pair of pins protrude from both sides of the plate. The pins are configured to be inserted into corresponding holes in the frame in order to fix the plates to the frame. This configuration allows the first coupling part to be connected to the vehicle in a particularly stable manner. In an example, the first coupling part may have a plate which is connectable to the towing vehicle.

In an example, the first connecting arrangement is a hook arrangement. In an example, the second connecting arrangement is a bearing part arrangement. The bearing part arrangement is configured to receive the hook arrangement. In another example, the first connecting arrangement may be a bearing part arrangement and the second connecting arrangement may be a hook arrangement, where the bearing part arrangement is configured to receive the hook arrangement.

In an example, the hook arrangement includes a central hook. The central hook is placed at an upper part of the first coupling part.

The hook arrangement may include a pair of lateral hooks. In an example, the lateral hooks of the pair of lateral hooks are placed at a lower part of the first coupling part. In an example, the bearing part arrangement includes a central bearing part. In an example, the central bearing part is placed at an upper part of the second coupling part. The central bearing part is adapted to receive the central hook of the first coupling part.

In an example, the bearing part arrangement includes a pair of horizontal bearing parts. In an example, the pair of horizontal bearing parts is placed at a lower part of the second coupling part. The pair of horizontal bearing parts is adapted to receive the pair of lateral hooks. In particular, coupling the first and second coupling parts using said hooks by inserting the hooks into the respective bearing parts allows obtaining a particularly precise and efficient connection.

In an example, the bearing part arrangement includes a pair of vertical plates. The bearing part arrangement also includes a horizontal bar. Said horizontal bar is located between the vertical plates of the pair of vertical plates. Furthermore, the hook arrangement may be tapered in shape at an upper part thereof. The hook arrangement may include a gap adapted for receiving the respective horizontal bar of the bearing part. This configuration allows obtaining a particularly precise and efficient connection between the first and the second coupling part.

In an example, the coupling device includes a plurality of actuators for fastening the first and the second connecting arrangements and to fasten the first and second hydraulic connectors.

The coupling device may include a control unit. The control unit may be connected to the plurality of actuators. The control unit is configured to activate the actuators according to a predetermined sequence. Thus, each actuator of the plurality of actuators can be controlled in such a way that the actuators are activated in a predetermined sequence and so that the other actuators remain inactive until a correct connection is made. It should be noted that the actuators are activated individually and one after the other or that two or more actuators are activated at the same time.

According to an aspect of it, this disclosure provides a towing vehicle. The towing vehicle comprises a frame.

The towing vehicle includes a lift. The towing vehicle includes a coupling device. The coupling device is configured to connect the towing vehicle to an agricultural machine. The first coupling part of the coupling device is connected to the frame of the towing vehicle and the second coupling part is mounted on the agricultural machine. This solution allows obtaining a towing vehicle in which the first coupling part of the coupling device is mounted on the vehicle in a particularly efficient and stable manner. It should be noted that, traditionally, the coupling device is mounted on the tractor at the lift of the towing vehicle and is moved by the lift. The solution according to this disclosure allows connecting and moving the coupling device in a particularly efficient way and obtaining a towing vehicle with a more efficient and robust coupling device.

According to an aspect of it, this disclosure provides a method for connecting an agricultural machine to a towing vehicle. The towing vehicle includes a frame. The towing vehicle includes a lift. The lift is movable relative to the frame. The method comprises a step of providing a coupling device. The coupling device includes a universal connection joint. The universal connection joint is configured to transfer mechanical power from the towing vehicle to the agricultural machine. The coupling device includes a first coupling part. The first coupling part has a first connecting arrangement. The first coupling part has a first hydraulic connector. The coupling device comprises a second coupling part. The second coupling part comprises a second connecting arrangement. The second coupling part comprises a second hydraulic connector.

The method comprises a step of mounting the first coupling part on the frame of the towing vehicle. The method comprises a step of mounting the second coupling part on the agricultural machine. The method comprises a step of moving a slider of the first coupling part upwards to fasten the first and the second connecting arrangements. The first connecting arrangement is fixed to the slider.

The method comprises a step of engaging the first hydraulic connector with the second hydraulic connector.

In an example, the first coupling part includes a connection bolt arrangement. Further, the second coupling part includes a corresponding aperture arrangement for housing the connection bolt arrangement. In another example, the first coupling part includes the aperture arrangement and the second coupling part includes the connection bolt arrangement. The method comprises a step of moving the connection bolt arrangement by means of a connection bolt actuator. The connection bolt arrangement is moved by the connection bolt actuator along a horizontal direction to be inserted into a corresponding aperture arrangement of the second coupling part when the first and the second coupling part are coupled.

In an example, the method comprises a step of inserting a drive shaft of the towing vehicle into a sleeve of the universal connection joint. The method may include a step, via a sleeve actuator, of moving the sleeve horizontally, forwards, to house a drive shaft of the agricultural machine. In particular, the sleeve is moved forwards when the first and the second parts of the coupling are coupled.

In an example, the sleeve has grooves on an inner side of it. The grooves match with the grooves of the drive shafts.

In an example, the first and the second coupling part are connected by a plurality of actuators. The actuators are activated in a predetermined sequence.

In an example, the agricultural machine is a baler.

These and other features will become more apparent from the following description of a preferred embodiment, illustrated purely by way of nonlimiting example in the accompanying drawings, in which:

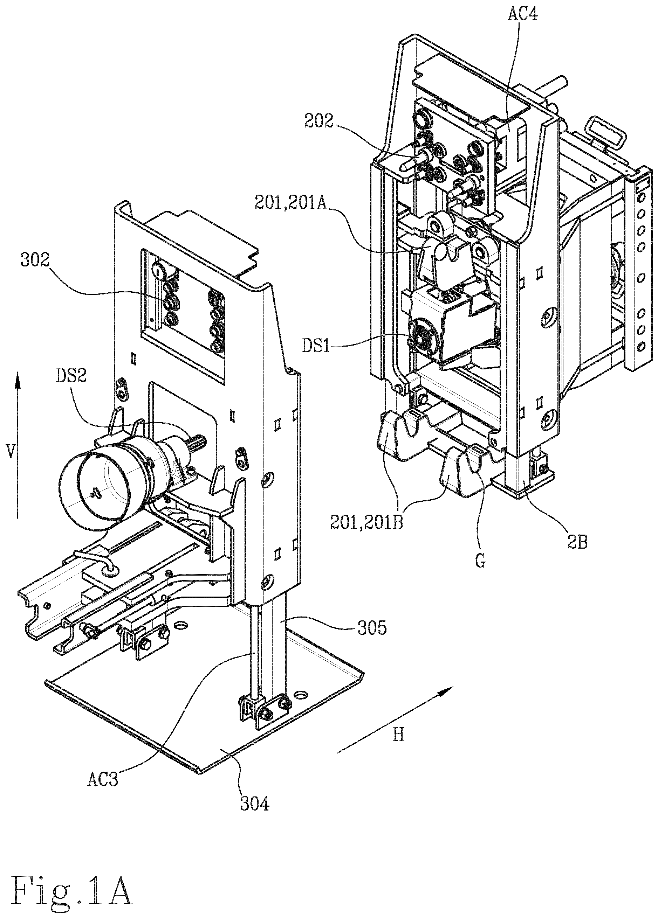

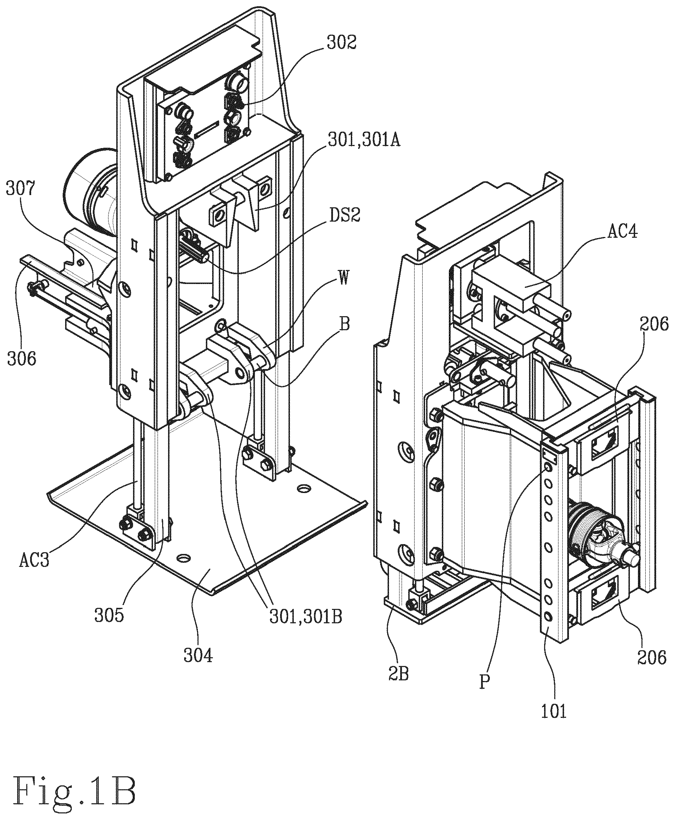

- Figures 1A and 1B illustrate the coupling device according to this disclosure;

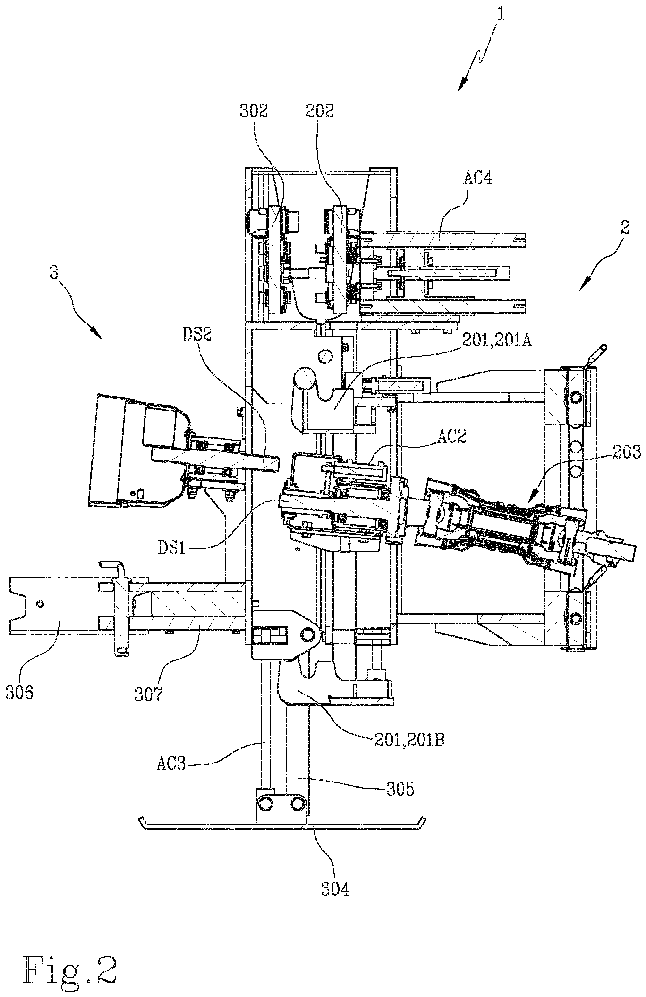

- Figure 2 is a side view of the coupling device;

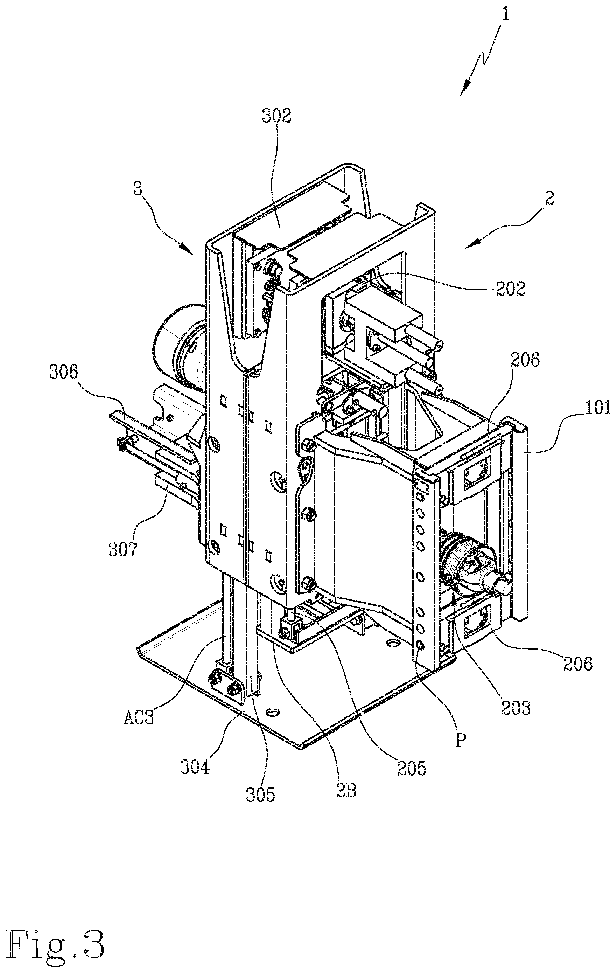

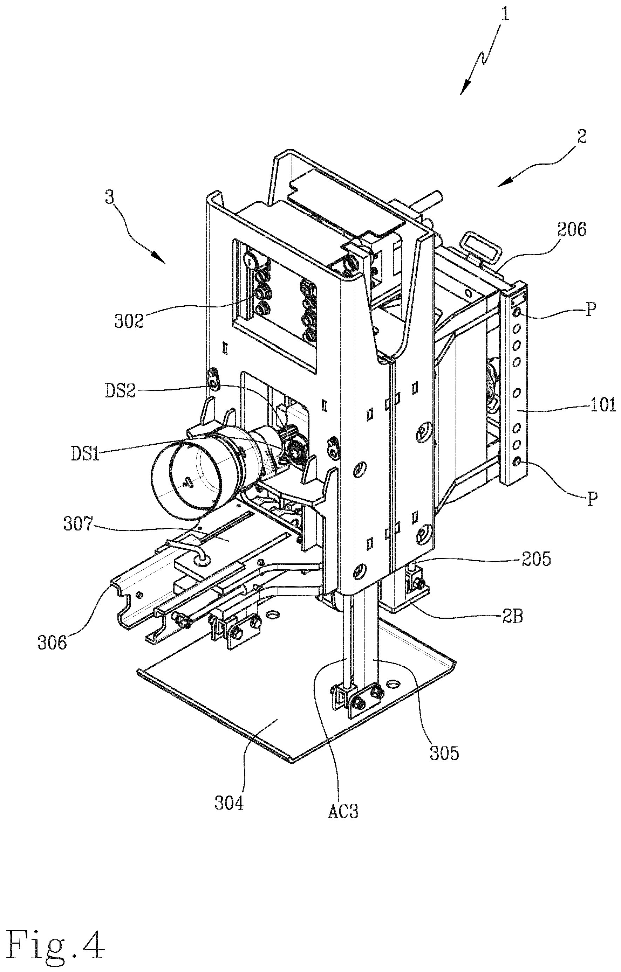

- Figures 3 and 4 illustrate the first and the second coupling part coupled to each other;

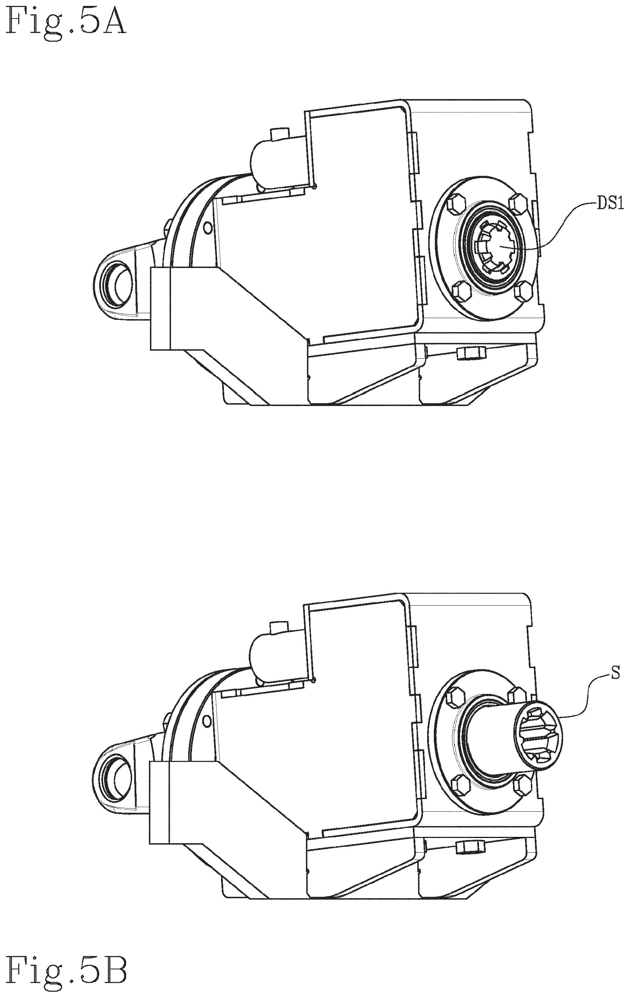

- Figures 5A and 5B illustrate details of the sleeve;

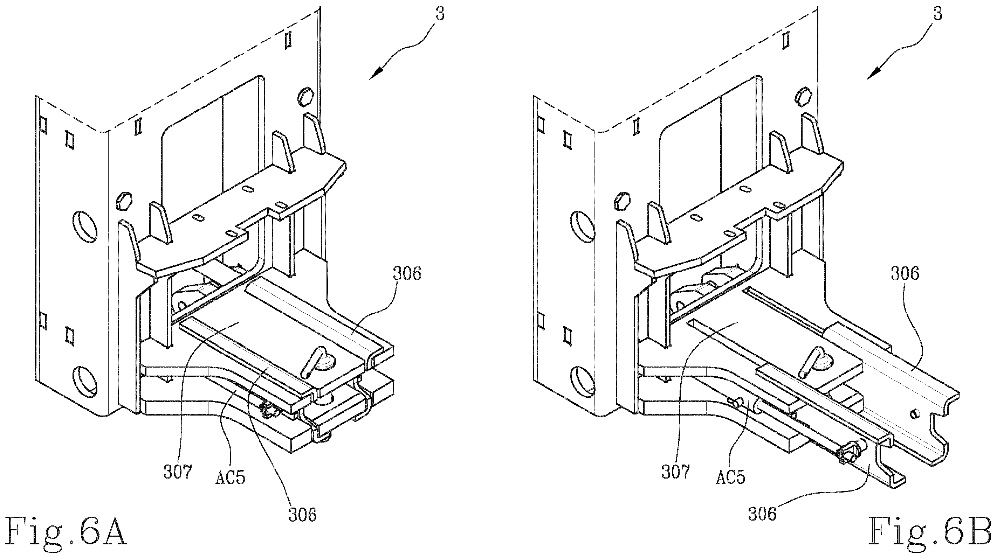

- Figures 6A and 6B illustrate the horizontal plate of the second coupling part;

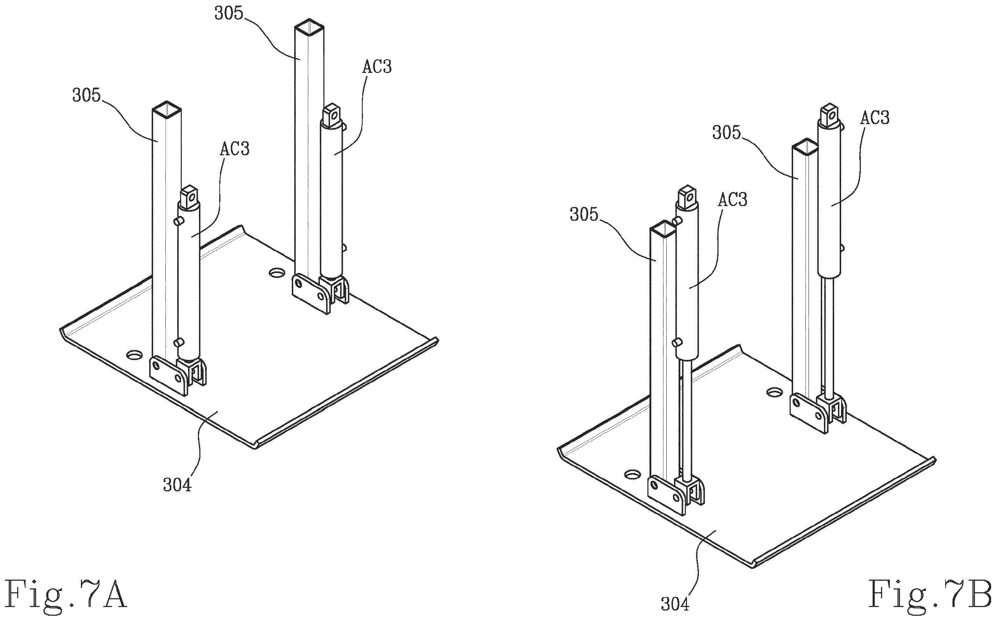

- Figures 7A and 7B illustrate the support device;
- Figures 8A-8D illustrate details of the connection between the first and the second coupling part;
- Figures 9A and 9B illustrate the universal connection joint;

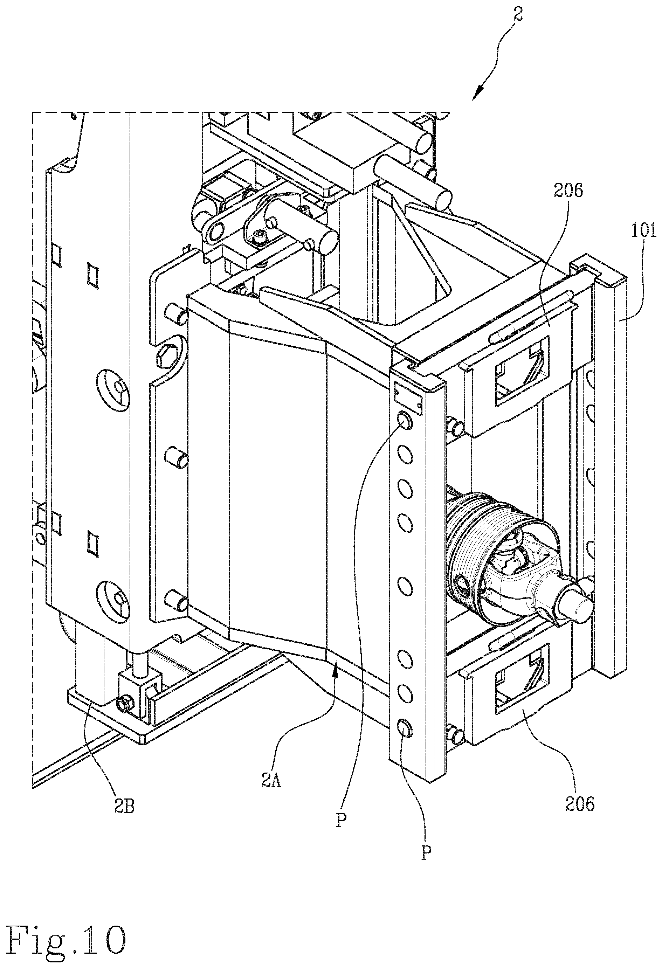

- Figure 10 illustrates the stationary portion of the first connecting arrangement connected to the frame of the towing vehicle;

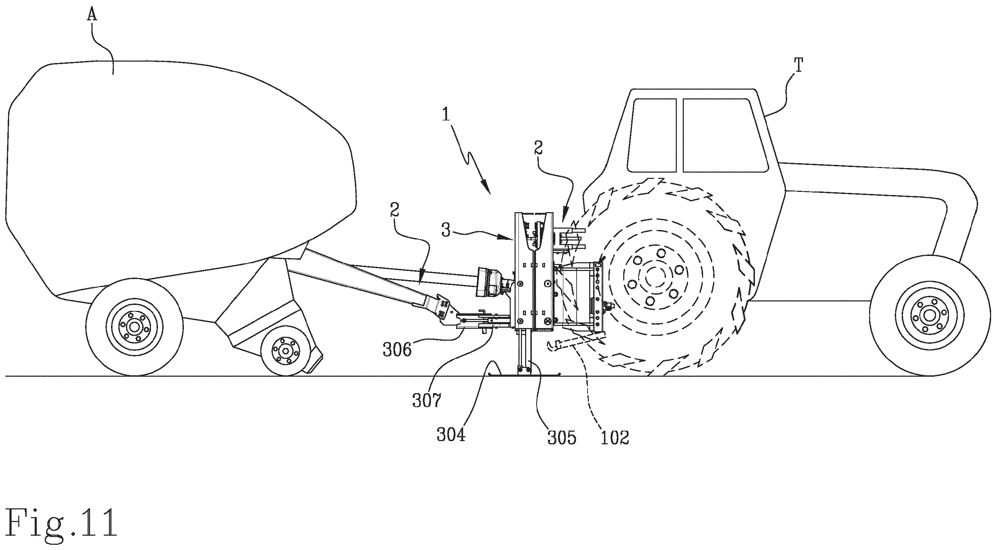

- Figure 11 illustrates the coupling device connected to a towing vehicle and to an agricultural machine;
- Figures 12A-12E illustrate the activation sequence of the actuators for coupling the first coupling part and the second coupling part;

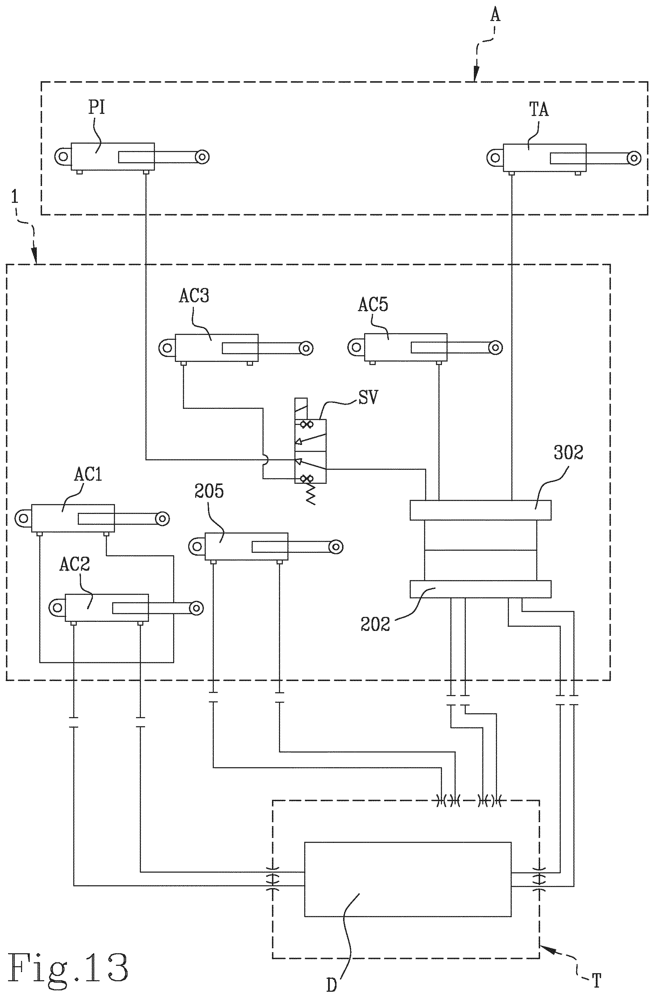

- Figure 13 illustrates the hydraulic circuit between the first and the second hydraulic connector.

With reference to the accompanying drawings, the numeral 1 denotes a coupling device. The coupling device connects an agricultural machine A to a towing vehicle T. The towing vehicle includes a frame 101. The towing vehicle T includes a lift 102. The lift is movable relative to the frame. The agricultural machine A may be a baler. The towing vehicle may be a tractor T. The coupling device 1 includes a universal connection joint 203. The universal connection joint receives mechanical power from a drive shaft DS1 of the towing vehicle and from a drive shaft DS2 of the agricultural machine and transmits the power from the towing vehicle T to the agricultural machine A. The universal connection joint 203 includes a first end and a second end. The first end of the universal connection joint receives the drive shaft DS1 of the towing vehicle and the second end of the universal connection joint receives the drive shaft DS2. of the agricultural machine. The coupling device 1 includes a first coupling part 2. The first coupling part 2 is mounted on the towing vehicle T. The first coupling part 2 comprises a first connecting arrangement 201 and a first hydraulic connector 202. The coupling device includes a second coupling part 3. The second coupling part 3 is mounted on the agricultural machine A and includes a second connecting arrangement 301 and a second hydraulic connector 302. The second hydraulic connector 302 is engaged with the first hydraulic connector 302 to establish a hydraulic connection between the towing vehicle T and the agricultural machine A. In an example, the coupling device includes a hydraulic connection actuator AC4. In particular, the hydraulic connection actuator AC4 belongs to the first coupling part 2. The hydraulic connection actuator AC4 moves the first hydraulic connector 202 forwards and backwards along a horizontal direction H between an operative and a non-operative position. At the operative position, the first and second hydraulic connectors are coupled, and at the non-operative position, the first and second hydraulic connectors are distanced from each other. The first hydraulic connector 202 includes a plate on which there is a plurality of hydraulic connections. The second hydraulic connector 302 includes a plate on which there is a plurality of receiving parts for receiving corresponding hydraulic connections. Further, the first hydraulic connector also includes, on its plate, an electrical connection to be inserted into a respective receiving part of the second hydraulic connector 302 to put the towing vehicle T and the agricultural machine A in communication with each other.

The first coupling part 2 and the second coupling part 3 are coupled together through the first and the second connecting arrangements to provide a mechanical connection between the agricultural machine A and the towing vehicle T. Please note that, the coupling device is formed by the first and the second coupling parts 2, 3 which can be engaged and disengaged with each other. The first and second coupling parts are mounted onto the towing device and the implement and do not form part of the towing device and the implement.

The first connecting arrangement 202 is a hook arrangement and the second connecting arrangement 302 is a bearing part arrangement for receiving the hook arrangement. Alternatively, the hook arrangement may belong to the second connecting arrangement 302 and the bearing part arrangement may belong to the first connecting arrangement 202. The hook arrangement includes a plurality of hooks. The plurality of hooks includes a central hook 201A and a pair of lateral hooks 201B. The central hook is placed at an upper part of the first coupling part 2. The lateral hooks 201B are placed at a lower part of the first coupling part. The lateral hooks 201B are placed at the sides of the central hook 201A.

The bearing part arrangement includes a plurality of bearing parts for receiving the corresponding plurality of hooks. The plurality of bearing parts includes a central bearing part 301A. A central bearing part 301A is placed at an upper part of the second coupling part 3 and is adapted to receive the central hook 201A.

The plurality of bearing parts includes a pair of horizontal bearing parts 301B at a lower part of the second coupling part and adapted to receive the pair of lateral hooks 201B. In an example, the horizontal bearing parts 301B are placed at the sides of the central bearing part 301A. In an example, the bearing part arrangement includes a pair of vertical plates W and a horizontal bar B. The horizontal bar is located between the vertical plates. The hooks of the plurality of hooks are tapered in shape at an upper part thereof and include a gap G which is adapted for receiving the respective horizontal bar B of the bearing part. The plurality of hooks and the plurality of bearing parts thus create three connecting points between the first and the second coupling part.

The first coupling part 2 includes a stationary portion 2A and a slider 2B. The first coupling part 2 is mounted on the frame 101 of the towing vehicle **T. In** particular, the stationary portion of the first coupling part is connected to the frame 101 of the towing vehicle T. The stationary portion 2A has a pair of plates 206 which extend horizontally. Each of the plates 206 each has a pair of pins P which protrude from both sides of the plate 206. The pins are inserted into corresponding holes h of the frame 101 to fix the plates 206 to the frame 101. The slider 2B is connected movably to the stationary portion. Further, the first connecting arrangement is attached to the slider to move upwards and downwards, between a coupling position and an uncoupling position. At the coupling position, the first and the second connecting arrangements are fastened and at the uncoupling position, the first and the second connecting arrangements are unfastened.

In particular, the upward and downward movements of the slider are accomplished via an actuator 205. The actuator 205 can move the slider 2B relative to the stationary portion 2A. In particular, when the first and second part are uncoupled (the inactive configuration of the coupling device), the actuator lifts the slider 2B to align the first connecting arrangement with the second connecting arrangement.

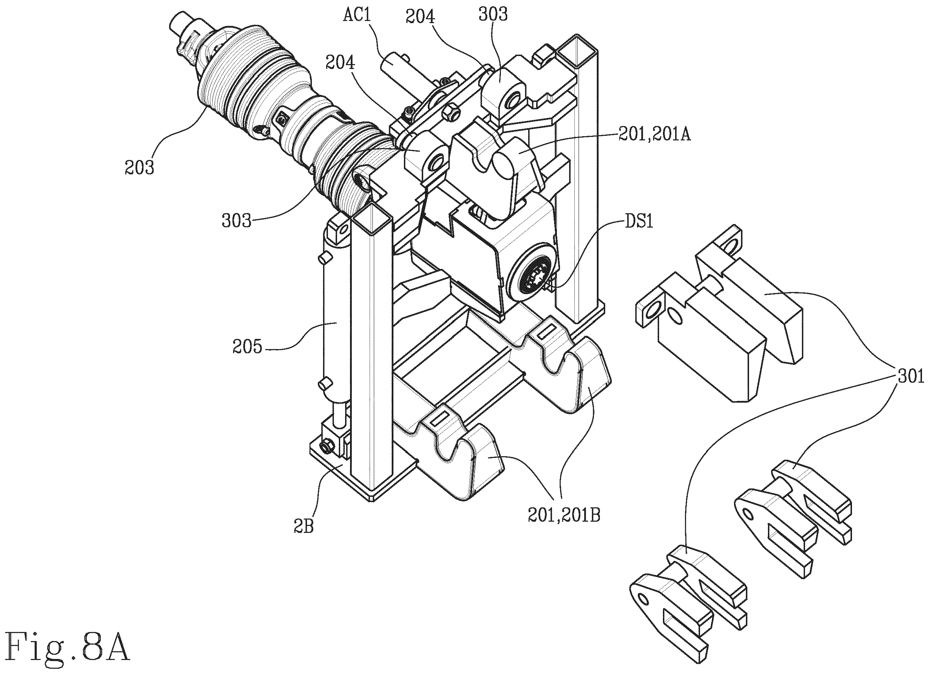

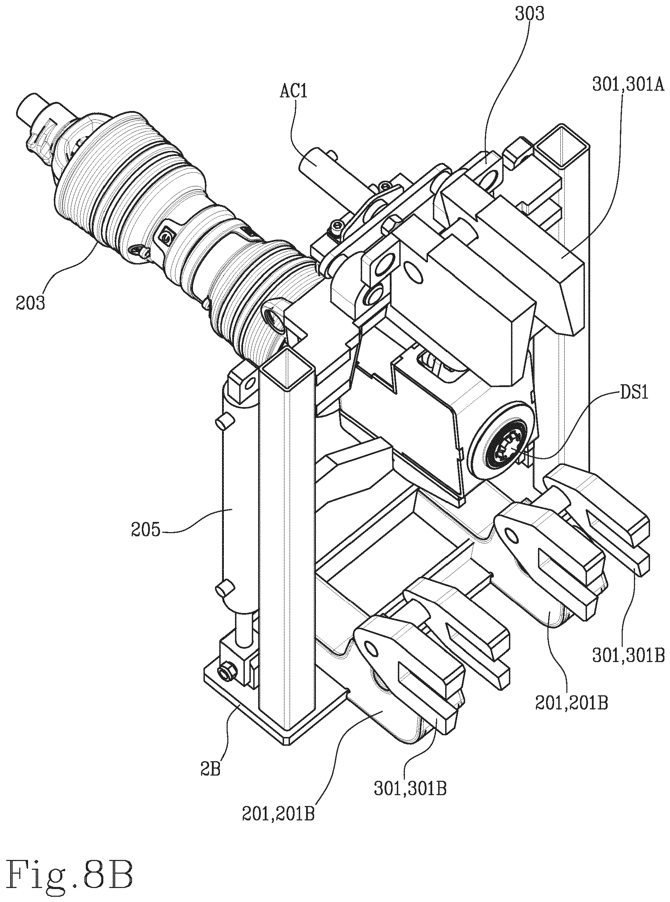

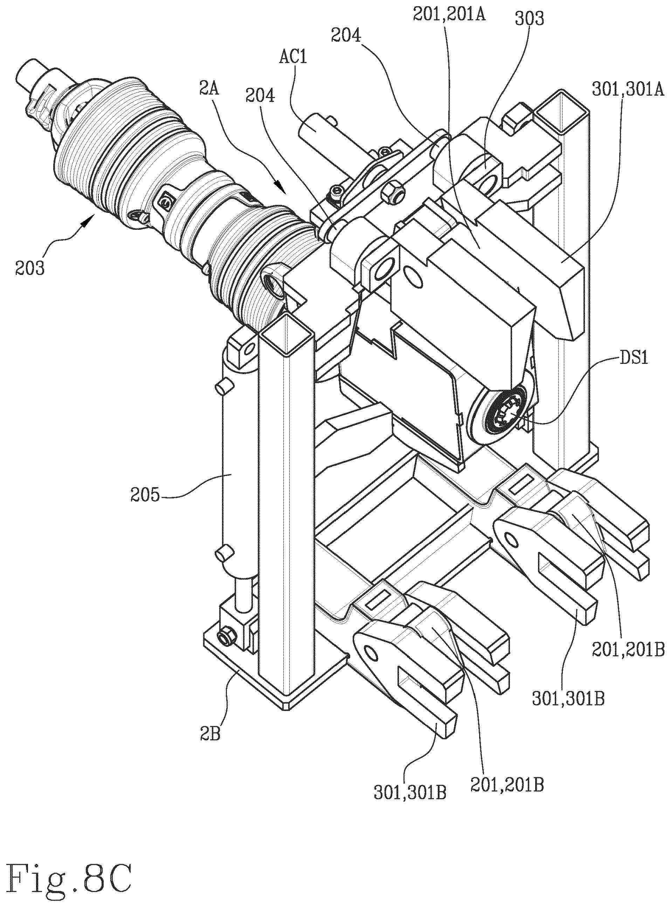

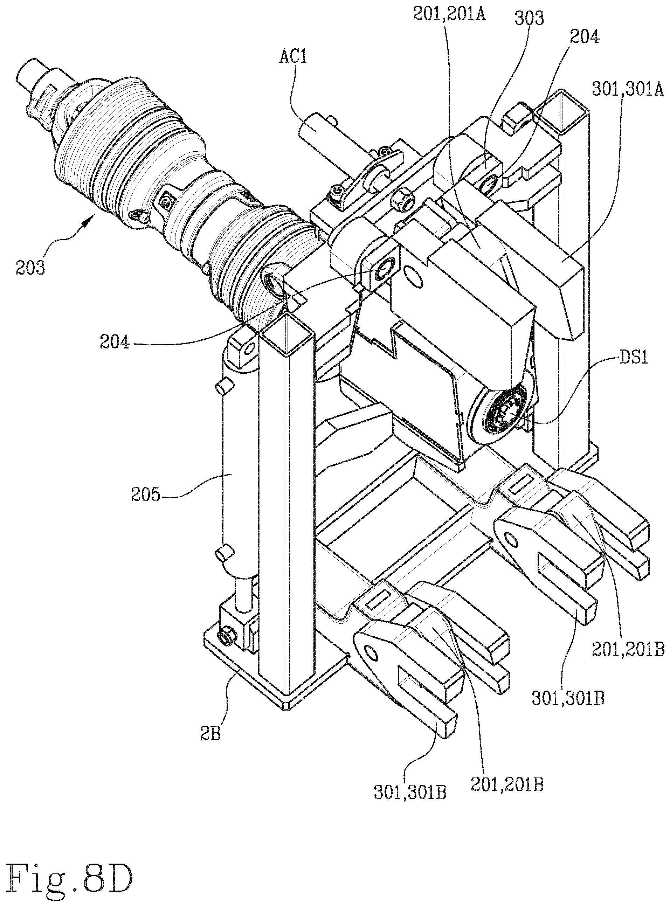

In an example, the connection between the first and the second hydraulic connector 202, 302 is made after the first and the second connecting arrangement 201, 301 have been connected. To uncouple the first and second coupling parts 2, 3, the slider 2B is moved downwards via the actuator 205. Figures 8A-8D show the first and second coupling parts 2, 3 in different configurations, from a configuration in which the first and second coupling parts 2, 3 are uncoupled to a configuration in which the parts are fully coupled to each other.

The first coupling part 2 also comprises a connection bolt arrangement 204. The connection bolt arrangement 204 includes a plurality of connection bolts. The connection bolts are moved by a connection bolt actuator AC1 between a first position, where the first and the second coupling parts are uncoupled and the connection bolt arrangement is distanced from a corresponding aperture arrangement 303 of the second coupling part, and a second position, where the first and the second coupling parts are coupled together and the connection bolt arrangement is inserted inside the corresponding aperture arrangement. The aperture arrangement 303 comprises a plurality of apertures for receiving the plurality of connection bolts. Alternatively, the connection bolts may belong to the second coupling part and the apertures may belong to the first coupling part. In particular, the first and second connecting arrangements 201, 301 are connected and then the plurality of connection bolts 204 are moved forwards by the connection bolt actuator AC1 and are inserted into the respective apertures 303. The connection bolt actuator AC1 may be a hydraulic actuator.

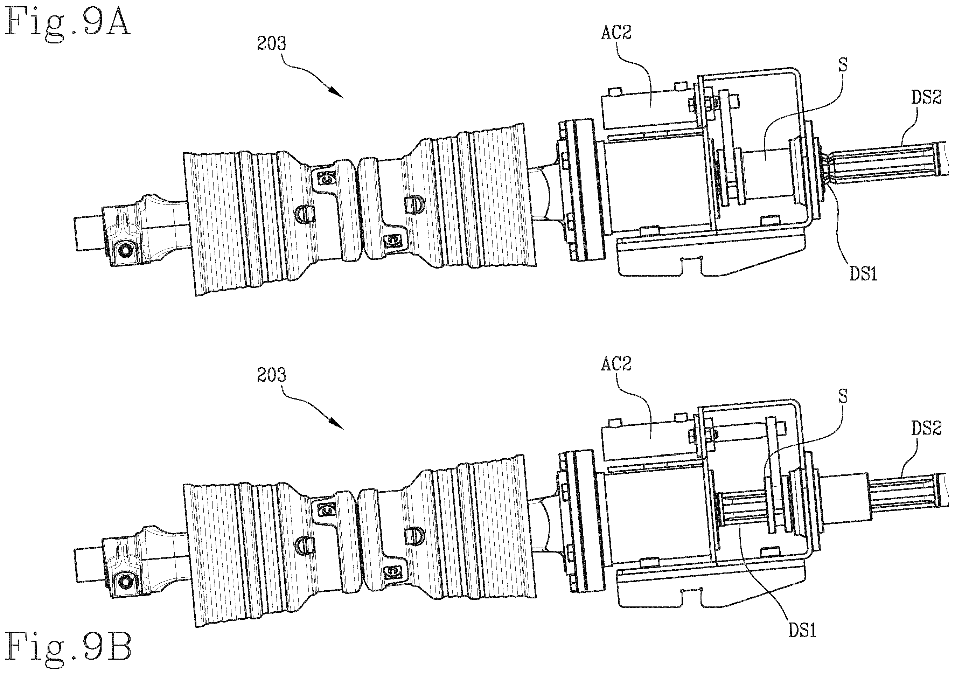

The coupling device 1 includes a sleeve S which houses the drive shaft DS1 of the towing vehicle at one side and the drive shaft DS2 of the agricultural machine at the other side. The sleeve S is located at the first end of the universal connection joint 203. Thus, the sleeve and the universal connection joint form a unit for transferring mechanical power from the towing vehicle to the agricultural machine. The sleeve S has grooves on an inner side of it, where the grooves match with splines on the drive shafts. Further, the sleeve is moved by a sleeve actuator AC2. The sleeve actuator AC2 may be hydraulic or electric. The sleeve actuator AC2 moves the sleeve horizontally forwards and backwards between a first configuration and a second configuration. In particular, in the first configuration the sleeve houses the drive shaft DS1 of the towing vehicle and the drive shaft of the agricultural machine is distanced from the sleeve. In the second configuration, the sleeve S houses both the drive shaft DS1 of the towing vehicle and the drive shaft DS2 of the agricultural machine. The sleeve S is moved into the second configuration when the first and second connecting arrangements 201, 301 are coupled to each other. Figures 9A and 9B illustrate the movements forwards and backwards of the sleeve. The second coupling part 3 also comprises a support device. The support device includes a support rod 305 and a support plate 304. The support rod 305 extends vertically.

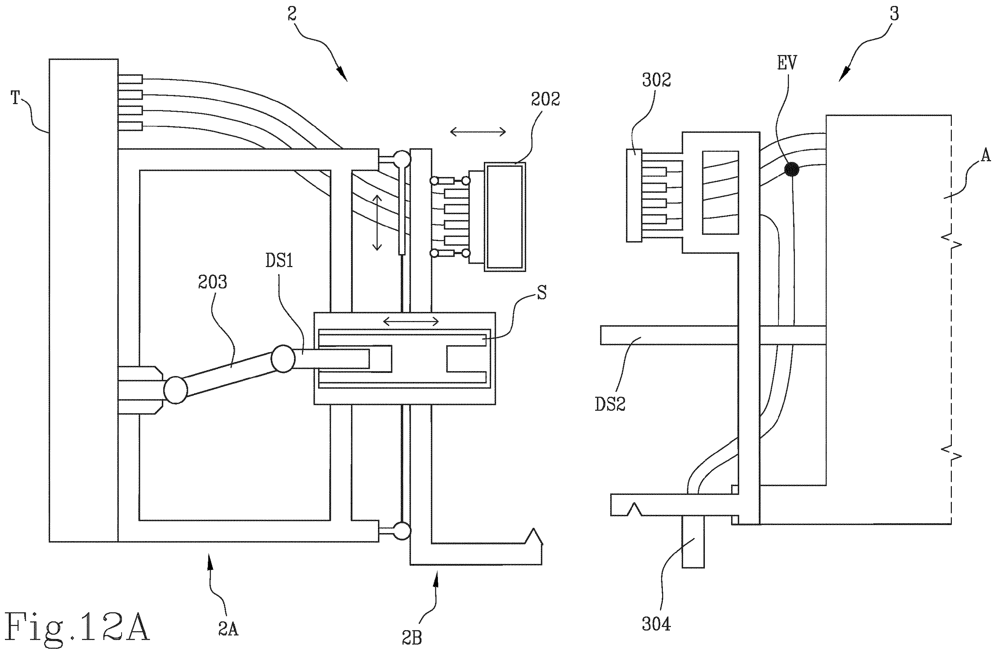

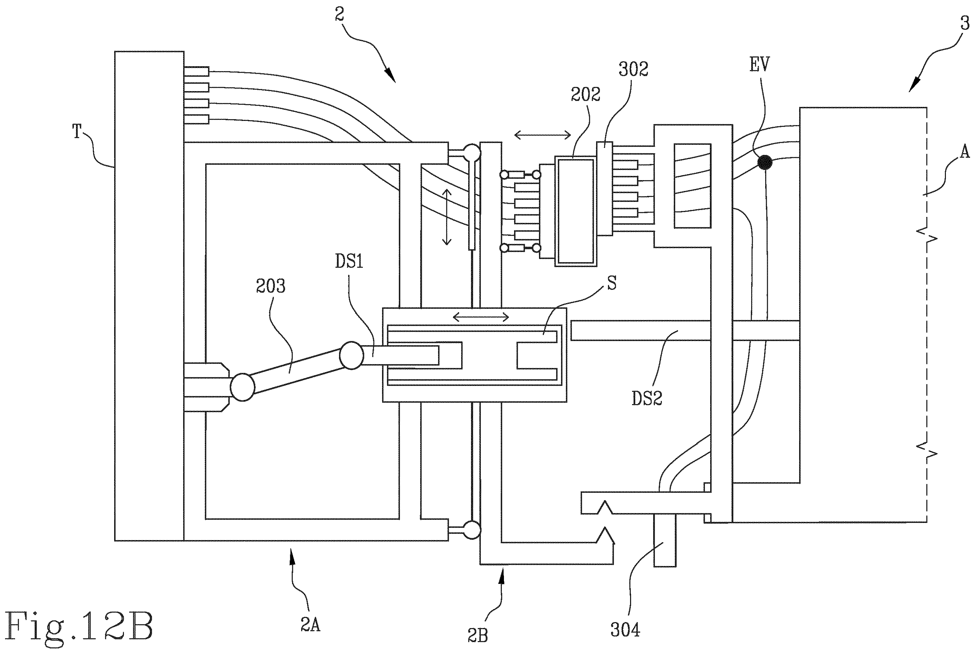

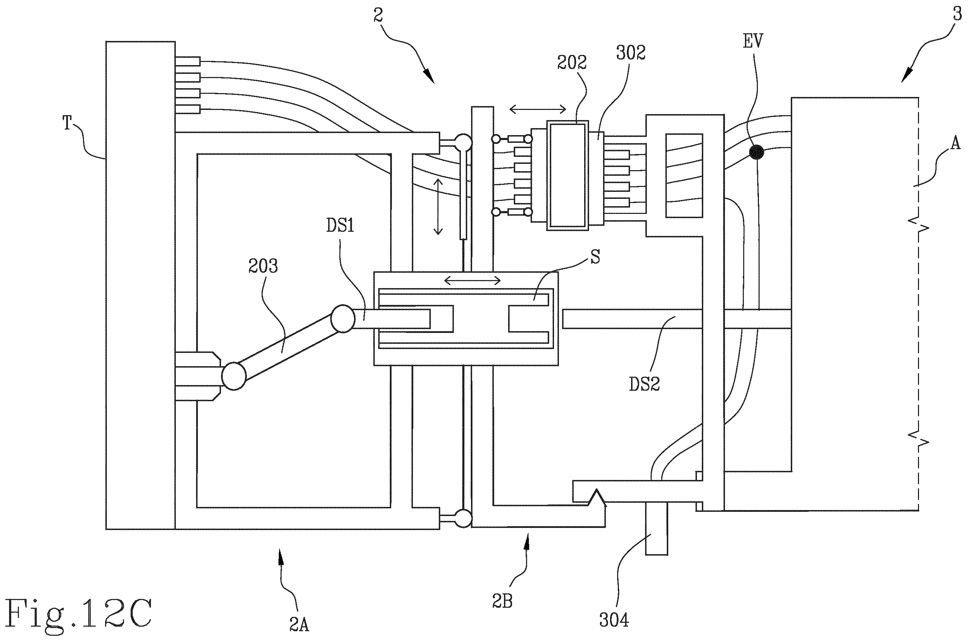

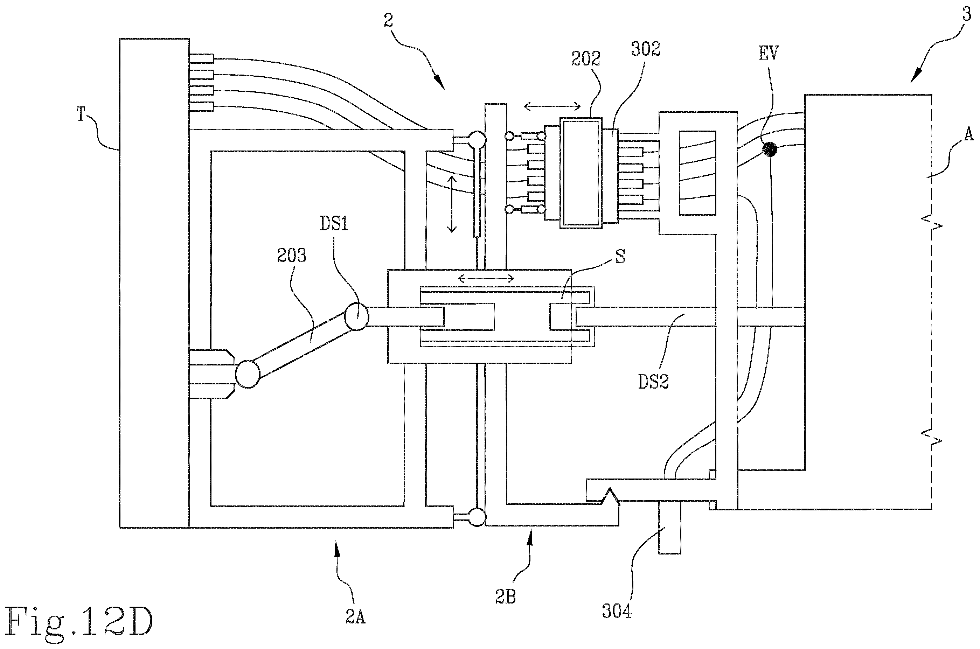

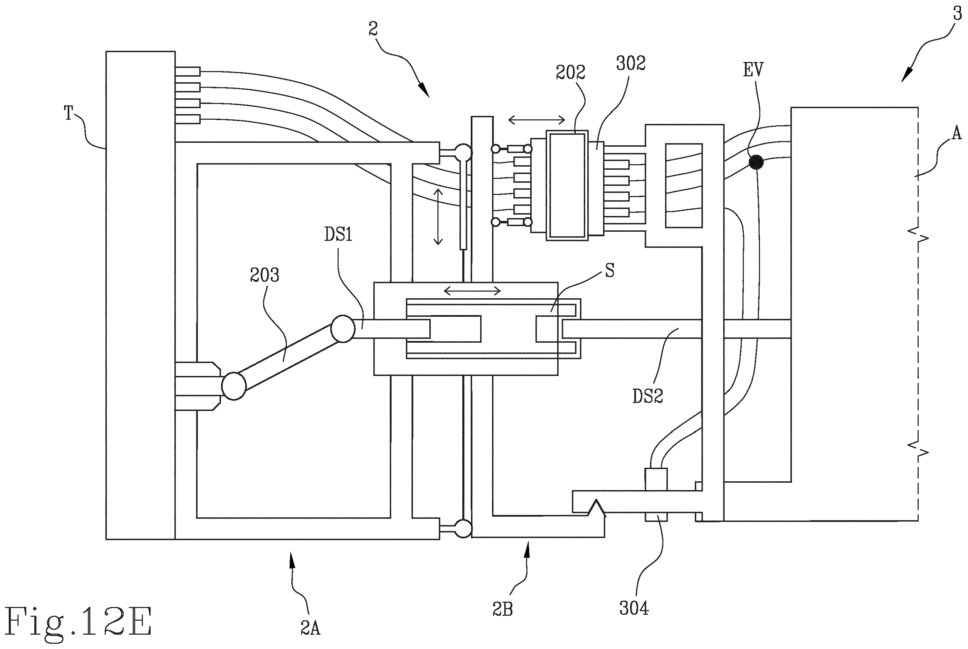

The support plate 304 extends horizontally and is connected to the support rod 305. The support device holds the second coupling part in the vertical position when the coupling device is in the inactive configuration. In particular, when the coupling device is in the inactive configuration (when the first and the second coupling part 2, 3 are uncoupled), the support rod 305 extends along a vertical direction V so that the support plate 304 is on the ground, and when the first and the second coupling part 2, 3 are coupled, the support rod 305 moves upwards along the vertical direction so that support plate remains raised off the ground. In particular, a hydraulic actuator AC3 is configured to move the support rod 305 vertically. The second coupling part 3 also includes a horizontal bar 307 and a horizontal plate 306 which slides along the horizontal bar 307. The horizontal plate is connected to the agricultural machine A. In particular, the horizontal plate 306 may be provided with a hole into which a bushing (also called as eyelet) is inserted to connect the second coupling part 3 to the agricultural machine A. The horizontal bar is located at the back of the second coupling part 3 and protrudes towards the agricultural machine. The back of the second coupling part is defined as the side facing towards the agricultural machine. In particular, when the coupling device 1 is in the inactive configuration, the horizontal plate 306 slides along the horizontal bar and extends in the horizontal direction to prevent lateral movements of the second coupling part. When the first and the second coupling part 2, 3 are joined, the horizontal plate 306 slides along the horizontal bar 307 and closes. The horizontal plate 306 is moved along the horizontal bar 307b by a horizontal plate actuator AC5. The horizontal plate actuator is a hydraulic actuator. The coupling device 1 also includes a control unit. The control unit controls a plurality of actuators which are used to couple or uncouple the first and the second coupling part 2, 3. Said plurality of actuators may include the actuator 205 which moves the slider 2B, the connection bolt actuator AC1, the sleeve actuator AC2, the hydraulic actuator AC3, the hydraulic connection actuator AC4 and the horizontal plate actuator AC5. Thus, the control unit activates and inactivates the actuators of the plurality of actuators in a predetermined sequence. For example, the actuator which moves the slider 2B is activated first; when the first and the second connecting arrangement 201, 301 are correctly coupled, the second actuator (the sleeve actuator AC2 or the hydraulic connection actuator AC4) is activated, and so on. In an example, in a first step of the predetermined sequence, the first coupling part 2 and the second coupling part 3, which are spaced apart, move closer together. It should be noted that in the first step, the first coupling part 2 is at a lower height than the second coupling part 3 (the distance of the first coupling part from the ground is less than the distance of the second coupling part from the ground). In a second step of the predetermined sequence, the first coupling part is raised. In particular, in this step, the slider 2B of the first coupling part is raised so as to position the universal connection joint (and the sleeve) and the first hydraulic connector 202 at the same height as the drive shaft DS2 of the agricultural machine and the second hydraulic connector 302, respectively. In a third step of the predetermined sequence, the hydraulic connection actuator moves the first hydraulic connector forwards and the first and the second hydraulic connector 202, 302 are coupled. The first and the second connecting arrangement 201, 301 are also coupled to each other in the third step. In a fourth step of the predetermined sequence, the sleeve actuator AC2 moves the sleeve S forwards so that the sleeve S houses both the drive shaft DS1 of the towing vehicle and the drive shaft DS2 of the agricultural machine. In a fifth step of the predetermined sequence, the support rod 305 is moved upwards along the vertical direction so that the support plate remains raised from the ground. Figures 12A-12E illustrate said sequence.

The hydraulic connection between the first and the second hydraulic connector 202, 302 allows connecting the hydraulic control valve D of the towing vehicle T to the agricultural machine A.

In an example, the actuator 205 which moves the slider 2B upwards and downwards is a hydraulic actuator and is connected to the hydraulic control valve D of the towing vehicle T. The connection bolt actuator AC1 and the sleeve actuator AC2 may also be hydraulic and connected to the hydraulic control valve D of the towing vehicle T. In an example, the agricultural machine is a baler and the actuator for opening and closing the tailgate TA of the baler is connected to the first hydraulic connector 202 and is connected to the hydraulic control valve D of the towing vehicle (in this example, the tractor) by the connection between the first and the second hydraulic connector and uses the hydraulic circuit of the tractor. The horizontal plate actuator AC5 may also be a hydraulic actuator and is connected to the hydraulic control valve D of the towing vehicle (in this example, the tractor) by the connection between the first and the second connector. Furthermore, in an example, the hydraulic actuator AC3 which moves the support rod is connected to the hydraulic control valve D by the connection between the first and the second hydraulic connector. Furthermore, in an example, a cylinder of the pick-up device PI of the baler A is connected to the hydraulic control valve D of the tractor by the connection between the first and the second hydraulic connector. In particular, a solenoid valve SV is used to connect and disconnect the cylinder of the pick-up device P of the baler to and from the hydraulic circuit of the tractor.

## Claims

1. A coupling device (1) for connecting an agricultural machine (A) to a towing vehicle (T), the coupling device comprising:
- a universal connection joint (203), having a first end and a second end, configured to receive power from a drive shaft (DS1) of the towing vehicle (T) at the first end and to receive power from a drive shaft (DS2) of the agricultural machine (A) at the second end;
- a first coupling part (2), configured to be mounted on the towing vehicle (T) and including
a first connecting arrangement (201),
a first hydraulic connector (202),
- a second coupling part (3), configured to be mounted on the agricultural machine (A) and including
a second connecting arrangement (301), and
a second hydraulic connector (302), configured to engage with the first hydraulic connector (202) to establish a hydraulic connection between the towing vehicle and the agricultural machine,
wherein the first coupling part and the second coupling part are configured to be coupled together through the first and the second connecting arrangements, to provide a mechanical connection between the agricultural machine (A) and the towing vehicle (T),
wherein the first coupling part (2) includes:
- a stationary portion (2A);
- a slider (2B), movably connected to the stationary portion (2A), the first connecting arrangement being attached to the slider to move upwards and downwards, between a coupling position and an uncoupling position, wherein the first and the second connecting arrangements are fastened and unfastened, respectively;
- an actuator (205), for moving the slider (2B) relative to the stationary portion (2A).

2. The coupling device (1) according to claim 1, wherein the first coupling part includes a connection bolt arrangement (204) and a connection bolt actuator (AC1), connected to the connection bolt arrangement, and wherein the second coupling part includes a corresponding aperture arrangement (303) configured to house said connection bolt arrangement, or vice versa, wherein the connection bolt actuator (AC1) is configured to move the connection bolt arrangement between a first position, wherein the first and the second coupling parts are uncoupled and the connection bolt arrangement is distanced from the corresponding aperture arrangement, and a second position, wherein the first and the second coupling parts are coupled together and the connection bolt arrangement is inserted inside the corresponding aperture arrangement.

3. The coupling device (1) according to claim 1 or 2, comprising:
- a sleeve (S) located at the first end of the universal connection joint (203) and configured to house the drive shaft of the towing vehicle (T) at one side and the drive shaft of the agricultural machine at the other side thereof, the sleeve having grooves on an inner side thereof, wherein the grooves match with splines of the drive shafts,
- a sleeve actuator (AC2), configured to move the sleeve horizontally, forwards and backwards between a first configuration and a second configuration, wherein in the first configuration the sleeve houses the drive shaft of the towing vehicle (T), and the drive shaft of the agricultural machine is distanced from the sleeve, and wherein in the second configuration the sleeve houses both the drive shaft of the towing vehicle (T) and the drive shaft of the agricultural machine.

4. The coupling device (1) according to any of the previous claims, wherein the second coupling part (3) includes a support device having:
- a support rod (305), extending vertically and movable;
- a support plate (304), extending horizontally and connected to the support rod, the support plate being configured to hold the second coupling part in a vertical position,
- a hydraulic actuator (AC3), configured to move the support rod vertically between an inactive position, wherein the support rod is extended, and the support plate is positioned on the ground, and an active position, wherein the support rod is retracted, and the plate is distanced from the ground.

5. The coupling device (1), according to any of the previous claims, wherein the second coupling part (3) includes:
- a horizontal bar (307), projecting from a back side of the second coupling part (3), the back side of the second coupling part being the side that faces the agricultural machine,
- a horizontal plate (306), connectable to the agricultural machine, the horizontal plate being slidable along the horizonal bar between an open position, wherein the first and the second coupling parts are coupled together, and the horizontal plate is extended, and a closed position, wherein the first and the second coupling parts are uncoupled, and the horizontal plate is retracted, the horizontal plate being configured to control lateral movements of the second coupling part,
- a horizontal plate actuator (AC5) for moving the horizontal plate between said open and closed positions.

6. The coupling device (1) according to any of the previous claims, wherein the first coupling part includes a hydraulic connection actuator (AC4), configured to move the first hydraulic connector (202) forwards and backwards, along a horizontal direction (H), between an operative and a non-operative position, wherein in the operative position, the first and the second hydraulic connectors are coupled, and wherein in the non-operative position the first and the second hydraulic connectors are distanced from each other.

7. The coupling device (1) according to any of the previous claims, wherein the stationary portion of the first coupling part is connectable to a frame (101) of the towing vehicle, the stationary portion (2A) having a pair of plates (206), extending horizontally, each plate having a pair of pins (P) projecting from either side thereof, the pins being configured to be inserted into corresponding holes (h) of the frame for fixing the plates to the frame.

8. The coupling device (1) according to any of the previous claims, wherein the first connecting arrangement (202) is a hook arrangement, and the second connecting arrangement (302) is a bearing part arrangement, for receiving the hook arrangement, or vice versa
wherein the hook arrangement includes
a central hook (201A), placed at an upper part of the first coupling part,
a pair of lateral hooks (201B), placed at a lower part of the first coupling part,
and wherein the bearing part arrangement includes
a central bearing part (301A), placed at an upper part of the second coupling part, and adapted to receive the central hook (201A),
a pair of horizontal bearing parts (301B) at a lower part of the second coupling part and adapted to receive the pair of lateral hooks (201B).

9. The coupling device according to claim 8, wherein
the bearing part arrangement includes a pair of vertical plates (W) and a horizontal bar (B) placed therebetween, and wherein the hook arrangement is tapered in shape at an upper part thereof and includes a gap (G) adapted for receiving the respective horizontal bar (B) of the bearing part.

10. The coupling device according to any of the previous claims, comprising:
- a plurality of actuators for fastening the first and the second connecting arrangements and to fasten the first and the second hydraulic connectors,
- a control unit, connected to the plurality of actuators and configured to activate the actuators according to a predetermined sequence.

11. A towing vehicle (T) comprising:
- a frame (101);
- a lift (102);
- a coupling device (1) for connecting the towing vehicle (T) to an agricultural machine (A), the coupling device being according to any of the previous claims, wherein the first coupling part of the coupling device (1) is connected to the frame of the towing vehicle and the second coupling part is mounted on the agricultural machine.

12. A method for connecting an agricultural machine (A) to a towing vehicle (T), the towing vehicle including a frame (101) and a lift (102) movable with respect to the frame, the method comprising the following steps:
- providing a coupling device (1) including
a universal connection joint (203), for transferring mechanical power from the towing vehicle to the agricultural machine,
a first coupling part (2) having a first connecting arrangement (201) and a first hydraulic connector (202),
a second coupling part (3) including a second connecting arrangement (301) and a second hydraulic connector (302),
- mounting the first coupling part on the frame of the towing vehicle (T);
- mounting the second coupling part on the agricultural machine (A);
- moving a slider (2A) of the first coupling part upwards to fasten the first and the second connecting arrangements, wherein the first connecting arrangement is attached to the slider,
- engaging the first hydraulic connector with the second hydraulic connector.

13. The method according to claim 12, wherein the first coupling part includes a connection bolt arrangement (204), and the second coupling part includes a corresponding aperture arrangement (303) to house said connection bolt arrangement, or vice versa, the method comprising a step, through a connection bolt actuator (AC1), of moving the connection bolt arrangement (204) along a horizontal direction (H) to insert the connection bolt arrangement (204) into a corresponding aperture arrangement (303) of the second coupling part, when the first and the second coupling parts are coupled.

14. The method according to claim 12 or 13, comprising the following steps:
- inserting a drive shaft (DS1) of the towing vehicle inside a sleeve (S) of the universal connection joint (203),
- moving, through a sleeve actuator (AC2), the sleeve horizontally, forwards, to house a drive shaft (DS2) of the agricultural machine, when the first and the second coupling parts are coupled,
wherein the sleeve (S) has grooves on an inner side thereof, wherein the grooves match with splines of the drive shafts.

15. The method according to any of the previous claims from 11 to 14, wherein a plurality of actuators is used for connecting the first and the second coupling parts, wherein the actuators are activated according to a predetermined sequence.

## Patentansprüche

1. Kupplungsvorrichtung (1) zum Verbinden einer landwirtschaftlichen Maschine (A) mit einem Zugfahrzeug (T), wobei die Kupplungsvorrichtung Folgendes umfasst:
- ein Universalverbindungsgelenk (203) mit einem ersten Ende und einem zweiten Ende, das dazu ausgelegt ist, an dem ersten Ende Leistung von einer Antriebswelle (DS1) des Zugfahrzeugs (T) aufzunehmen und an dem zweiten Ende Leistung von einer Antriebswelle (DS2) der landwirtschaftlichen Maschine (A) aufzunehmen;
- ein erstes Kupplungsteil (2), das zur Montage am Zugfahrzeug (T) ausgelegt ist und einschließend eine erste Verbindungsanordnung (201),
einen ersten hydraulischen Verbinder (202),
- ein zweites Kupplungsteil (3), das zur Montage an der landwirtschaftlichen Maschine (A) ausgelegt ist und einschließend
eine zweite Verbindungsanordnung (301) und
einen zweiten hydraulischen Verbinder (302), der dazu ausgelegt ist, mit dem ersten hydraulischen Verbinder (202) in Eingriff zu treten, um eine hydraulische Verbindung zwischen dem Zugfahrzeug und der landwirtschaftlichen Maschine herzustellen,
wobei das erste Kupplungsteil und das zweite Kupplungsteil dazu ausgelegt sind, durch die erste und die zweite Verbindungsanordnung miteinander gekoppelt zu werden, um eine mechanische Verbindung zwischen der landwirtschaftlichen Maschine (A) und dem Zugfahrzeug (T) bereitzustellen,
wobei das erste Kupplungsteil (2) Folgendes einschließt:
- einen stationären Abschnitt (2A);
- einen Schieber (2B), der beweglich mit dem stationären Abschnitt (2A) verbunden ist, wobei die erste Verbindungsanordnung an dem Schieber angebracht ist, um sich zwischen einer Kupplungsposition und einer Entkupplungsposition nach oben und nach unten zu bewegen, wobei die erste und die zweite Verbindungsanordnung jeweils befestigt und gelöst sind;
- einen Aktuator (205) zum Bewegen des Schiebers (2B) relativ zum stationären Abschnitt (2A).

2. Kupplungsvorrichtung (1) nach Anspruch 1, wobei das erste Kupplungsteil eine Verbindungsbolzenanordnung (204) und einen Verbindungsbolzenaktuator (AC1) einschließt, der mit der Verbindungsbolzenanordnung verbunden ist, und wobei das zweite Kupplungsteil eine entsprechende Öffnungsanordnung (303) einschließt, die dazu ausgelegt ist, die Verbindungsbolzenanordnung unterzubringen, oder umgekehrt, wobei der Verbindungsbolzenaktuator (AC1) dazu ausgelegt ist, die Verbindungsbolzenanordnung zwischen einer ersten Position, in der das erste und das zweite Kupplungsteil entkoppelt sind und die Verbindungsbolzenanordnung von der entsprechenden Öffnungsanordnung beabstandet ist, und einer zweiten Position, in der das erste und das zweite Kupplungsteil miteinander gekoppelt sind und die Verbindungsbolzenanordnung in die entsprechende Öffnungsanordnung eingesetzt ist, zu bewegen.

3. Kupplungsvorrichtung (1) nach Anspruch 1 oder 2, umfassend:
- eine Hülse (S), die sich am ersten Ende des Universalverbindungsgelenks (203) befindet und dazu ausgelegt ist, die Antriebswelle des Zugfahrzeugs (T) auf einer Seite und die Antriebswelle der landwirtschaftlichen Maschine auf der anderen Seite davon unterzubringen, wobei die Hülse Nuten auf einer Innenseite davon aufweist, wobei die Nuten mit Keilnuten der Antriebswellen übereinstimmen,
- einen Hülsenaktuator (AC2), der dazu ausgelegt ist, die Hülse horizontal vorwärts und rückwärts zwischen einer ersten Auslegung und einer zweiten Auslegung zu bewegen, wobei in der ersten Auslegung die Hülse die Antriebswelle des Zugfahrzeugs (T) unterbringt und die Antriebswelle der landwirtschaftlichen Maschine von der Hülse beabstandet ist, und wobei in der zweiten Auslegung die Hülse sowohl die Antriebswelle des Zugfahrzeugs (T) als auch die Antriebswelle der landwirtschaftlichen Maschine unterbringt.

4. Kupplungsvorrichtung (1) nach einem der vorhergehenden Ansprüche, wobei das zweite Kupplungsteil (3) eine Stützvorrichtung einschließt, die Folgendes aufweist:
- einen Stützstab (305), der sich vertikal erstreckt und beweglich ist;
- eine Stützplatte (304), die sich horizontal erstreckt und mit dem Stützstab verbunden ist, wobei die Stützplatte dazu ausgelegt ist, das zweite Kupplungsteil in einer vertikalen Position zu halten,
- einen hydraulischen Aktuator (AC3), der dazu ausgelegt ist, den Stützstab vertikal zwischen einer inaktiven Position, in der der Stützstab ausgefahren ist und die Stützplatte auf dem Boden positioniert ist, und einer aktiven Position, in der der Stützstab zurückgezogen ist und die Platte vom Boden beabstandet ist, zu bewegen.

5. Kupplungsvorrichtung (1) nach einem der vorhergehenden Ansprüche, wobei das zweite Kupplungsteil (3) Folgendes einschließt:
- eine horizontale Stange (307), die von einer Rückseite des zweiten Kupplungsteils (3) vorsteht, wobei die Rückseite des zweiten Kupplungsteils die Seite ist, die der landwirtschaftlichen Maschine zugewandt ist,
- eine horizontale Platte (306), die mit der landwirtschaftlichen Maschine verbindbar ist, wobei die horizontale Platte entlang der horizontalen Stange zwischen einer offenen Position, in der das erste und das zweite Kupplungsteil miteinander gekoppelt sind und die horizontale Platte ausgefahren ist, und einer geschlossenen Position, in der das erste und das zweite Kupplungsteil entkoppelt sind und die horizontale Platte zurückgezogen ist, verschiebbar ist, wobei die horizontale Platte dazu ausgelegt ist, seitliche Bewegungen des zweiten Kupplungsteils zu steuern,
- einen horizontalen Plattenaktuator (AC5) zum Bewegen der horizontalen Platte zwischen der offenen und geschlossenen Position.

6. Kupplungsvorrichtung (1) nach einem der vorhergehenden Ansprüche, wobei das erste Kupplungsteil einen hydraulischen Verbindungsaktuator (AC4) einschließt, der dazu ausgelegt ist, den ersten hydraulischen Verbinder (202) vorwärts und rückwärts entlang einer horizontalen Richtung (H) zwischen einer betriebsbereiten und einer nicht betriebsbereiten Position zu bewegen, wobei in der betriebsbereiten Position der erste und der zweite hydraulische Verbinder gekoppelt sind, und wobei in der nicht betriebsbereiten Position der erste und der zweite hydraulische Verbinder voneinander beabstandet sind.

7. Kupplungsvorrichtung (1) nach einem der vorhergehenden Ansprüche, wobei der stationäre Abschnitt des ersten Kupplungsteils mit einem Rahmen (101) des Zugfahrzeugs verbindbar ist, wobei der stationäre Abschnitt (2A) ein Paar Platten (206) aufweist, die sich horizontal erstrecken, wobei eine jede Platte ein Paar Stifte (P) aufweist, die von einer jeden Seite davon vorstehen, wobei die Stifte dazu ausgelegt sind, in entsprechende Löcher (h) des Rahmens eingesetzt zu werden, um die Platten an dem Rahmen zu fixieren.

8. Kupplungsvorrichtung (1) nach einem der vorhergehenden Ansprüche, wobei die erste Verbindungsanordnung (202) eine Hakenanordnung ist und die zweite Verbindungsanordnung (302) eine Lagerteilanordnung zur Aufnahme der Hakenanordnung oder umgekehrt ist,
wobei die Hakenanordnung Folgendes einschließt:
einen zentralen Haken (201A), der an einem oberen Teil des ersten Kupplungsteils angeordnet ist,
ein Paar seitlicher Haken (201B), die an einem unteren Teil des ersten Kupplungsteils angeordnet sind,
und wobei die Lagerteilanordnung Folgendes einschließt:
ein zentrales Lagerteil (301A), das an einem oberen Teil des zweiten Kupplungsteils angeordnet und dazu angepasst ist, den zentralen Haken (201A) aufzunehmen,
ein Paar horizontaler Lagerteile (301B) an einem unteren Teil des zweiten Kupplungsteils und dazu angepasst, das Paar seitlicher Haken (201B) aufzunehmen.

9. Kupplungsvorrichtung nach Anspruch 8, wobei die Lagerteilanordnung ein Paar vertikaler Platten (W) und eine dazwischen angeordnete horizontale Stange (B) einschließt, und wobei die Hakenanordnung in Form an einem oberen Teil davon verjüngt ist und einen Spalt (G) einschließt, der angepasst ist, um die jeweilige horizontale Stange (B) des Lagerteils aufzunehmen.

10. Kupplungsvorrichtung nach einem der vorhergehenden Ansprüche, umfassend:
- eine Vielzahl von Aktuatoren zum Befestigen der ersten und der zweiten Verbindungsanordnung und zum Befestigen des ersten und des zweiten hydraulischen Verbinders,
- eine Steuereinheit, die mit der Vielzahl von Aktuatoren verbunden und dazu ausgelegt ist, die Aktuatoren gemäß einer vorbestimmten Sequenz zu aktivieren.

11. Zugfahrzeug (T), umfassend:
- einen Rahmen (101);
- einen Lift (102);
- eine Kupplungsvorrichtung (1) zum Verbinden des Zugfahrzeugs (T) mit einer landwirtschaftlichen Maschine (A), wobei die Kupplungsvorrichtung nach einem der vorhergehenden Ansprüche ist, wobei das erste Kupplungsteil der Kupplungsvorrichtung (1) mit dem Rahmen des Zugfahrzeugs verbunden ist und das zweite Kupplungsteil an der landwirtschaftlichen Maschine montiert ist.

12. Verfahren zum Verbinden einer landwirtschaftlichen Maschine (A) mit einem Zugfahrzeug (T), wobei das Zugfahrzeug einen Rahmen (101) und einen Lift (102) einschließt, der in Bezug auf den Rahmen beweglich ist, wobei das Verfahren die folgenden Schritte umfasst:
- Bereitstellen einer Kupplungsvorrichtung (1), einschließend
ein Universalverbindungsgelenk (203) zum Übertragen mechanischer Leistung von dem Zugfahrzeug auf die landwirtschaftliche Maschine,
ein erstes Kupplungsteil (2) mit einer ersten Verbindungsanordnung (201) und einem ersten hydraulischen Verbinder (202),
ein zweites Kupplungsteil (3) mit einer zweiten Verbindungsanordnung (301) und einem zweiten hydraulischen Verbinder (302),
- Montieren des ersten Kupplungsteils am Rahmen des Zugfahrzeugs (T);
- Montieren des zweiten Kupplungsteils an der landwirtschaftlichen Maschine (A);
- Bewegen eines Schiebers (2A) des ersten Kupplungsteils nach oben, um die erste und die zweite Verbindungsanordnung zu befestigen, wobei die erste Verbindungsanordnung an dem Schieber angebracht ist,
- Ineingriffbringen des ersten hydraulischen Verbinders mit dem zweiten hydraulischen Verbinder.

13. Verfahren nach Anspruch 12, wobei das erste Kupplungsteil eine Verbindungsbolzenanordnung (204) einschließt und das zweite Kupplungsteil eine entsprechende Öffnungsanordnung (303) einschließt, um die Verbindungsbolzenanordnung unterzubringen, oder umgekehrt, wobei das Verfahren einen Schritt, durch einen Verbindungsbolzenaktuator (AC1), zum Bewegen der Verbindungsbolzenanordnung (204) entlang einer horizontalen Richtung (H) umfasst, um die Verbindungsbolzenanordnung (204) in eine entsprechende Öffnungsanordnung (303) des zweiten Kupplungsteils einzusetzen, wenn das erste und das zweite Kupplungsteil gekoppelt sind.

14. Verfahren nach Anspruch 12 oder 13, umfassend die folgenden Schritte:
- Einsetzen einer Antriebswelle (DS1) des Zugfahrzeugs in eine Hülse (S) des Universalverbindungsgelenks (203),
- Bewegen der Hülse durch einen Hülsenaktuator (AC2) horizontal vorwärts, um eine Antriebswelle (DS2) der landwirtschaftlichen Maschine unterzubringen, wenn das erste und das zweite Kupplungsteil gekoppelt sind, wobei die Hülse (S) Nuten auf einer Innenseite davon aufweist, wobei die Nuten mit Keilnuten der Antriebswellen übereinstimmen.

15. Verfahren nach einem der vorhergehenden Ansprüche von 11 bis 14, wobei eine Vielzahl von Aktuatoren zum Verbinden des ersten und des zweiten Kupplungsteils verwendet wird, wobei die Aktuatoren gemäß einer vorbestimmten Reihenfolge aktiviert werden.

## Revendications

1. Dispositif d'accouplement (1) pour relier une machine agricole (A) à un véhicule tracteur (T), le dispositif d'accouplement comprenant :
- un joint d'accouplement universel (203), comportant une première extrémité et une seconde extrémité, configuré pour recevoir la puissance d'un arbre d'entraînement (DS1) du véhicule tracteur (T) à la première extrémité et pour recevoir la puissance d'un arbre d'entraînement (DS2) de la machine agricole (A) à la seconde extrémité ;
- une première partie d'accouplement (2), configurée pour être montée sur le véhicule tracteur (T) et incluant un premier agencement (201) de raccordement,
un premier raccord hydraulique (202),
- une seconde partie d'accouplement (3), configurée pour être montée sur la machine agricole (A) et incluant un second agencement (301) de raccordement, et
un second raccord hydraulique (302), configuré pour se mettre en prise avec le premier raccord hydraulique (202) afin d'établir un raccord hydraulique entre le véhicule tracteur et la machine agricole,
dans lequel la première partie d'accouplement et la seconde partie d'accouplement sont configurées pour être accouplées l'une à l'autre par l'intermédiaire des premier et second agencements de raccordement, afin d'assurer un raccordement mécanique entre la machine agricole (A) et le véhicule tracteur (T),
dans lequel la première partie d'accouplement (2) inclut :
- une partie fixe (2A) ;
- un coulisseau (2B), relié de manière mobile à la partie fixe (2A), le premier agencement de raccordement étant fixé au coulisseau pour se déplacer vers le haut et vers le bas, entre une position d'accouplement et une position de désaccouplement, dans lequel les premier et second agencements de raccordement sont respectivement attachés et détachés ;
- un actionneur (205), destiné à déplacer le coulisseau (2B) par rapport à la partie fixe (2A).

2. Dispositif d'accouplement (1) selon la revendication 1, dans lequel la première partie d'accouplement inclut un agencement (204) de boulons de raccordement et un actionneur (AC1) de boulons de raccordement, relié à l'agencement de boulons de raccordement, et dans lequel la seconde partie d'accouplement inclut un agencement (303) d'ouvertures correspondant configuré pour loger ledit agencement de boulons de raccordement, ou vice versa, dans lequel l'actionneur (AC1) de boulons de raccordement est configuré pour déplacer l'agencement de boulons de raccordement entre une première position, dans laquelle les première et seconde parties d'accouplement sont désaccouplées et l'agencement de boulons de raccordement est éloigné de l'agencement d'ouvertures correspondant, et une seconde position, dans laquelle les première et seconde parties d'accouplement sont accouplées l'une à l'autre et l'agencement de boulons de raccordement est inséré à l'intérieur de l'agencement d'ouvertures correspondant.

3. Dispositif d'accouplement (1) selon la revendication 1 ou 2, comprenant :
- un manchon (S) situé à la première extrémité du joint de raccordement universel (203) et configuré pour loger l'arbre d'entraînement du véhicule tracteur (T) à un côté et l'arbre d'entraînement de la machine agricole à l'autre côté, le manchon comportant des rainures sur son côté interne, dans lequel les rainures s'adaptent aux cannelures des arbres d'entraînement,
- un actionneur (AC2) de manchon, configuré pour déplacer le manchon horizontalement, vers l'avant et vers l'arrière, entre une première configuration et une seconde configuration, dans lequel, dans la première configuration, le manchon loge l'arbre d'entraînement du véhicule tracteur (T), et l'arbre d'entraînement de la machine agricole est éloigné du manchon, et dans lequel, dans la seconde configuration, le manchon loge à la fois l'arbre d'entraînement du véhicule tracteur (T) et l'arbre d'entraînement de la machine agricole.

4. Dispositif d'accouplement (1) selon l'une quelconque des revendications précédentes, dans lequel la seconde partie d'accouplement (3) inclut un dispositif de support comportant :
- une tige de support (305), s'étendant verticalement et mobile ;
- une plaque de support (304), s'étendant horizontalement et reliée à la tige de support, la plaque de support étant configurée pour maintenir la seconde partie d'accouplement dans une position verticale,
- un actionneur hydraulique (AC3), configuré pour déplacer la tige de support verticalement entre une position inactive, dans laquelle la tige de support est déployée et la plaque de support est positionnée au sol, et une position active, dans laquelle la tige de support est rétractée et la plaque est éloignée du sol.

5. Dispositif d'accouplement (1) selon l'une quelconque des revendications précédentes, dans lequel la seconde partie d'accouplement (3) inclut :
- une barre horizontale (307), faisant saillie à partir d'un côté arrière de la seconde partie d'accouplement (3), le côté arrière de la seconde partie d'accouplement étant le côté faisant face à la machine agricole,
- une plaque horizontale (306), pouvant être reliée à la machine agricole, la plaque horizontale pouvant coulisser le long de la barre horizontale entre une position ouverte, dans laquelle les première et seconde parties d'accouplement sont accouplées l'une à l'autre et la plaque horizontale est déployée, et une position fermée, dans laquelle les première et seconde parties d'accouplement sont désaccouplées et la plaque horizontale est rétractée, ladite plaque horizontale étant configurée pour commander les mouvements latéraux de la seconde partie d'accouplement,
- un actionneur (AC5) de plaque horizontale destiné à déplacer la plaque horizontale entre lesdites positions ouverte et fermée.

6. Dispositif d'accouplement (1) selon l'une quelconque des revendications précédentes, dans lequel la première partie d'accouplement inclut un actionneur (AC4) de raccord hydraulique, configuré pour déplacer le premier raccord hydraulique (202) vers l'avant et vers l'arrière, le long d'une direction horizontale (H), entre une position fonctionnelle et une non fonctionnelle, dans lequel, dans la position fonctionnelle, les premier et second raccords hydrauliques sont accouplés, et dans lequel, dans la position non fonctionnelle, les premier et second raccords hydrauliques sont éloignés l'un de l'autre.

7. Dispositif d'accouplement (1) selon l'une quelconque des revendications précédentes, dans lequel la partie fixe de la première partie d'accouplement peut être reliée à un châssis (101) du véhicule tracteur, la partie fixe (2A) comportant une paire de plaques (206), s'étendant horizontalement, chaque plaque comportant une paire de broches (P) faisant saillie de chaque côté de celle-ci, les broches étant configurées pour être insérées dans des trous correspondants (h) du châssis afin de fixer les plaques au châssis.

8. Dispositif d'accouplement (1) selon l'une quelconque des revendications précédentes, dans lequel le premier agencement (202) de raccordement est un agencement de crochet, et le second agencement (302) de raccordement est un agencement de partie de roulement, destiné à recevoir l'agencement de crochet, ou vice versa,
dans lequel l'agencement de crochet inclut un crochet central (201A), placé au niveau d'une partie supérieure de la première partie d'accouplement,
une paire de crochets latéraux (201B), placés au niveau d'une partie inférieure de la première partie d'accouplement,
et dans lequel l'agencement de partie de roulement inclut une partie de roulement centrale (301A), placée au niveau d'une partie supérieure de la seconde partie d'accouplement et adaptée pour recevoir le crochet central (201A),
une paire de parties de roulement horizontales (301B), situées au niveau d'une partie inférieure de la seconde partie d'accouplement et adaptées pour recevoir la paire de crochets latéraux (201B).

9. Dispositif d'accouplement selon la revendication 8, dans lequel l'agencement de parties de roulement inclut une paire de plaques verticales (W) et une barre horizontale (B) placée entre celles-ci, et dans lequel l'agencement de crochet présente une forme tronconique au niveau de sa partie supérieure et inclut un espace (G) adapté pour recevoir la barre horizontale (B) respective de la partie de roulement.

10. Dispositif d'accouplement selon l'une quelconque des revendications précédentes, comprenant :
- une pluralité d'actionneurs destinés à attacher les premier et second agencements de raccordement et à attacher les premier et second raccords hydrauliques,
- une unité de commande, reliée à la pluralité d'actionneurs et configurée pour activer les actionneurs selon une séquence prédéterminée.

11. Véhicule tracteur (T), comprenant :
- un châssis (101) ;
- un dispositif de levage (102) ;
- un dispositif d'accouplement (1) pour relier le véhicule tracteur (T) à une machine agricole (A), le dispositif d'accouplement étant selon l'une quelconque des revendications précédentes, dans lequel la première partie d'accouplement du dispositif d'accouplement (1) est reliée au châssis du véhicule tracteur et la seconde partie d'accouplement est montée sur la machine agricole.

12. Procédé de raccordement d'une machine agricole (A) à un véhicule tracteur (T), le véhicule tracteur incluant un châssis (101) et un dispositif de levage (102) mobile par rapport au châssis, le procédé comprenant les étapes suivantes :
- fournir un dispositif d'accouplement (1) incluant un joint de raccordement universel (203), destiné à transférer la puissance mécanique du véhicule tracteur à la machine agricole,
une première partie d'accouplement (2) comportant un premier agencement (201) de raccordement et un premier raccord hydraulique (202),
une seconde partie d'accouplement (3) incluant un second agencement (301) de raccordement et un second raccord hydraulique (302),
- monter la première partie d'accouplement sur le châssis du véhicule tracteur (T) ;
- monter la seconde partie d'accouplement sur la machine agricole (A) ;
- déplacer vers le haut un coulisseau (2A) de la première partie d'accouplement afin d'attacher les premier et second agencements de raccordement, dans lequel le premier agencement de raccordement est fixé au coulisseau,
- mettre en prise le premier raccord hydraulique avec le second raccord hydraulique.

13. Procédé selon la revendication 12, dans lequel la première partie d'accouplement inclut un agencement (204) de boulons de raccordement, et la seconde partie d'accouplement inclut un agencement (303) d'ouvertures correspondant destiné à loger ledit agencement de boulons de raccordement, ou vice versa, le procédé comprenant une étape consistant, à l'aide d'un actionneur (AC1) de boulons de raccordement, à déplacer l'agencement (204) de boulons de raccordement le long d'une direction horizontale (H) afin d'insérer l'agencement (204) de boulons de raccordement dans un agencement (303) d'ouvertures correspondant de la seconde partie d'accouplement, lorsque les première et seconde parties d'accouplement sont accouplées.

14. Procédé selon la revendication 12 ou 13, comprenant les étapes suivantes :
- insérer un arbre d'entraînement (DS1) du véhicule tracteur à l'intérieur d'un manchon (S) du joint de raccordement universel (203),
- déplacer, à l'aide d'un actionneur (AC2) de manchon, le manchon horizontalement vers l'avant afin de loger un arbre d'entraînement (DS2) de la machine agricole, lorsque les première et seconde parties d'accouplement sont accouplées,
dans lequel le manchon (S) comporte des rainures sur son côté interne, dans lequel les rainures s'adaptent aux cannelures des arbres d'entraînement.

15. Procédé selon l'une quelconque des revendications précédentes de 11 à 14, dans lequel une pluralité d'actionneurs est utilisée pour relier les première et seconde parties d'accouplement, dans lequel les actionneurs sont activés selon une séquence prédéterminée.
